Europäisches Patentamt

European Patent Office

Office européen des brevets

(19)

(11)     EP 0 558 564 B2

(12)     NEW EUROPEAN PATENT SPECIFICATION

(45) Date of publication and mention
of the opposition decision:
**08.08.2001   Bulletin 2001/32**

(45) Mention of the grant of the patent:
**01.05.1996   Bulletin 1996/18**

(21) Application number: **91920205.1**

(22) Date of filing: **22.11.1991**

(51) Int Cl.⁷: $G06K\ 7/08$, $G07D\ 7/00$

(86) International application number:
**PCT/GB91/02068**

(87) International publication number:
**WO 92/09969 (11.06.1992 Gazette 1992/13)**

(54) **MAGNETIC FIELD SENSOR AND METHOD**

MESSFÜHLER UND -VERFAHREN FÜR EIN MAGNETISCHES FELD

DETECTEUR DE CHAMP MAGNETIQUE ET PROCEDE DE DETECTION

(84) Designated Contracting States:
**CH DE ES FR GB IT LI**

(30) Priority:  **22.11.1990  GB 9025391**

(43) Date of publication of application:
**08.09.1993   Bulletin 1993/36**

(73) Proprietor: **THOMAS DE LA RUE LIMITED**
**London WC2N 4DE (GB)**

(72) Inventors:
• **VERMOT-GAUD, Jacques c/o Telmeco S.A.**
**Plan-les-Ouates CH-1228 Genève (CH)**

• **BRATCHLEY, Robin 30 Bingley Grove Woodley**
**Berkshire RG5 4TT (GB)**

(74) Representative:
**Skone James, Robert Edmund et al**
**GILL JENNINGS & EVERY**
**Broadgate House**
**7 Eldon Street**
**London EC2M 7LH (GB)**

(56) References cited:
**EP-A- 0 295 229**          **EP-A- 0 467 202**
**US-A- 3 508 227**          **US-A- 3 976 199**

EP 0 558 564 B2

**Description**

The invention relates to a magnetic field sensor for sensing magnetisable and magnetized areas on or in an authenticatable item such as a security document.

In order to maintain the security of currency against fraudulent counterfeiting as well as providing security features on other documents and items, it has become the practice to incorporate magnetic or magnetizable particles in an ink or coating which is provided in or on the document. The presence of these magnetic particles is not immediately apparent to the user of the currency or document. Several sensors or detectors have been proposed in the past for detecting the presence of these particles. In one detector magnetic particles are suspended in a liquid so that when the detector is brought into contact with a substrate carrying magnetically energized particles, the particles in the detector will align and cause an optical effect which can be seen. Other detectors are modelled on a conventional audio cassette tape head which is rubbed over the substrate, the head being connected to circuitry which provides an audio or visual indication of the presence of a magnetic field. An example is shown in US-A-3976199. In this case, magnetizable particles at the edge of a currency bill are magnetized by passing them across a permanent magnet and the particles retain their magnetism for sufficient period that when they pass the detector, a change in magnetic flux will be sensed. This detector is large, cumbersome to use, and relatively insensitive.

Schaefer Instruments Limited of Wantage, Oxon, England market a magnetic sensor using a Hall Effect instrument.

US-A-4803949 discloses another type of sensor (essentially a metal detector) which in this case comprises a core of for example ferrite on which is wound a primary coil supplied with an alternating current and a secondary coil in which a mutual induction current is generated. The primary coil generates an alternating magnetic field which induces current in the secondary coil and also generates eddy currents in a metallic sheet which may or may not be of magnetizable material positioned adjacent the sensor. When these eddy currents change due to changes in the material, the impedance of the induction coil is changed which results in a change in the magnitude of induced currents generated in the secondary coil. This can be detected. The device is principally a metal detector.

EP-A-0295229 describes a sensor for detecting the magnetic properties of banknotes having the precharacterising features of the appended claim 1 and in which a permanent magnet is positioned adjacent a detector head so as to magnetize particles carried by the banknotes which then generate local magnetic fields which, as they pass the head, induce an EMF in the head which can be detected. Critical to the working of this invention is the isolation of the magnetic field generated by the magnet from influencing the head. The unit is also cumbersome.

EP-A-0467202 published on 9 July 1991 and thus forming part of the state of the art under Article 54 (3) EPC describes a sensor for detecting magnetisable particles in or on authenticatable documents such as banknotes. The sensor includes a permanent magnet and a coil arranged such that the coil is under the influence of the magnet and defines together with the same a magnetic circuit. The passage of magnetic particles in or on the banknote under test perturbs the magnetic field of the magnet. These perturbations induce a voltage in the coil which can be detected. The coil has a rectangular cross-section.

A number of problems have arisen with these known systems. One particular problem concerns the detection of magnetizable (i.e. unmagnetized) materials. In most of the cases described, it is necessary for the magnetic particles to be magnetized and to retain their magnetism for a period sufficient to enable their individual magnetic fields to be detected.

Another problem is that they are comparatively insensitive and require the presence of a relatively strong magnetic field before they are activated. Unfortunately. in order to provide a sufficiently strong field it is necessary to include a large concentration of magnetic particles within the ink which means that the ink takes up a relatively dark colour. It is desirable to be able to make use of inks which contain a much smaller proportion of magnetic particles. for example down to 2.5% or less by weight. Typically, magnetic inks contain between 10 and 40% of magnetic particles.

In accordance with one aspect of the present invention. we provide a sensor in accordance with claim 1.

In accordance with a second aspect of the invention, we provide a method of detecting magnetisable and magnetised areas on or in an authenticatable item such as a security document, the method comprising causing relative movement between the item and a sensor according to the first aspect of the invention: and monitoring the indicating means for an indication of induced voltage in the electrical circuit.

We have devised a much more sensitive sensor which is suitable for detecting low field strengths and low remanence values, magnetic materials, and nonmagnetic, magnetisable materials enabling, in the case of inks, lower concentrations of magnetic particles to be included in those inks or soft magnetic materials i.e. having low remanence. This then allows a higher quantity of colouring pigment to be included. allowing a much wider variety of colours to be printed each of which has a magnetic characteristic. As a further advantage the magnetic material can be placed under the surface of the item. For example the magnetic ink may be placed under a laminating film. Alternatively the ink may be heavily overprinted with an obliterating ink.

The invention is based on a sensing device which defines a magnetic circuit in which a steady magnetic field exists, the circuit including a coil influenced by magnetic flux from the magnet. Thus in the steady state no emf will be generated in the coil. The passage of magnetizable material past the magnetic circuit will perturb the magnetic field thus causing a change in magnetic flux influencing the coil and hence induce a voltage in the coil. Thus, in contrast to prior art approaches where it is necessary to premagnetize the particles. this is not necessary and so problems of demagnetization before the particles come within range of the sensor are avoided. Of course. the sensor is also capable of detecting magnetized particles. This approach also increases the sensitivity of the sensor as explained above.

A further advantage of the invention. which relies on detecting a perturbation on the magnetic field. is that it is much less directionally sensitive than conventional devices. This has the advantage that the authenticatable item and the compact sensor can be moved in a wide variety of different, relative directions in contrast to conventional sensors which require that the direction of relative movement is carefully controlled. This is a particular advantage where the direction of magnetization is unknown to the user.

Another reason why some conventional sensors are not sufficiently sensitive for the present purposes is due to the fact that they are all based on narrow gapped arrangements similar to magnetic tape heads. With these conventional heads, it is necessary to press the sensor closely against the document to achieve sufficient signal strength. Such relatively high pressure contact can cause wearing of the document through repeated use and variations in pressure and lack of close contact can cause faulty readings. Preferably, therefore, the magnetic circuit has an open section defined between non-facing faces of the sensing device, the authenticatable item passing through the open section of the magnetic circuit in use. Thus, the new sensors are sufficiently sensitive for light contact to be sufficient and in certain instances can be out of contact with the document thus reducing wear from repeated scanning.

The dimensions of the coil can be chosen empirically but the coil diameter will lie in the range 0.1 - 3 mm, preferably 0.8 mm; typically the length of the coil will lie in the range 2-30 mm. preferably 3-10 mm, most preferably 4.5 mm on a former of slightly less diameter: and the number of turns in the coil will depend on the desired relative speed of movement between document and sensor. For very low speeds eg 1 to 3 mm/second. the numbers of turns will exceed one thousand but for high speeds eg 100 mm/second and above, ten to fifty turns can be used. In general the number of turns will be in the range 200-5000. The diameter of the wire chosen is dependent on the desired coil diameter. coil length and numbers of turns but in the preferred case will be less than 1000 microns. between 10-200 microns. generally in the range 10-50 microns. typically 15-25 microns. preferably about 20 microns. Coils falling within this definition will be termed "microcoils". Instead of using very thin insulated wires, thin film technology may be employed. in which the coil is formed as a planar spiral on a flat surface, which is held orthogonally to the surface being scanned. An example of a thin film head is described in "The Complete Handbook of Magnetic Recording" by F. Jorgensen. TAB Books Inc. 1988. pp 204-205.

In passing it should be noted that these microcoils could be used by themselves to detect premagnetized particles.

Although theoretically the coil need not be wound on a magnetically permeable core if the flux created by the magnet was large enough and subject to a suitable level of change when the authenticatable item passed by. in general the coil will be wound around a soft. ferromagnetic core which. in use. is unsaturated. The core could comprise a soft ferrite or possibly soft iron. The term "soft" indicates that the material does not readily retain magnetism. The coil would normally be directly wound on the core for compactness. By concentrating the magnetic flux from the magnet into the core. the effect of magnetizable or magnetized matenal passing by will be maximized.

An advantage of ferrite cores is that being sintered ceramics. they are mouldable before sintering and thus can be moulded to special shapes.

Preferably, the coil and core are coaxial. Typically the core will be longer than the coil but usually not more than three times and generally less than twice. Preferably a leading end of the core is pointed and used to locate the part of the item to be sensed.

The core could either be linear or bent. for example in the form of an "L". In this latter case, the coil could be wound around one side of the "L" while the other side projects towards the authenticatable item in use. In other cases, it is preferred that the axis of the coil extends in a direction transverse. preferably orthogonal. to the plane of the authenticatable item during relative movement. In some cases the coil could be planar in cross-section, similar to a tile.

In some cases, the relative movement between the device and an authenticatable item may be generated manually, for example by moving the device by hand. In other applications, however, the device may further comprise oscillation means for oscillating the coil and magnet in synchronism. This oscillation may be used by itself or in addition to a manual movement. For example. the oscillation means may comprise a leaf spring on which the coil and the magnet are mounted. a cam engaging the leaf spring, and a motor for rotating the cam to cause the leaf spring to oscillate. The benefit of oscillation is that the sensing head need only be pointed rather than swiped.

The indicating means may provide an audio and/or visual indication. Preferably, the sensor further comprises an amplifying circuit connected to the coil, the indicating means being connected to the amplifying circuit so as to provide an indication when signals from the amplifying circuit exceed a threshold, eg a voltage threshold. The indicating means may be adapted to provide a permanent but resettable indication as soon as the threshold is exceeded.

The magnet is preferably a permanent magnet, eg a samarium cobalt magnet, or an AlNiCo or Nd-FeB magnet, although an electromagnet or solenoid supplied with DC current could also be used. Preferably, the magnet is mounted to a support to which the coil is also mounted. In the preferred embodiment of the hand-held device a rectangular prism samarium cobalt magnet has been effectively employed.

Typically, the North-South direction of the magnet is substantially orthogonal to the coil axis.

In some applications, the sensor is provided in sheet handling apparatus, such as banknote sorting or counting apparatus, the apparatus defining a path along which sheets are transported, and the sensor being positioned alongside the path to detect magnetic particles on or in the transported sheets.

The invention is particularly suitable for use in a self-contained, hand held and portable form in which a housing is provided containing all the sensor components and power supply, such as a battery. For example, the housing may have an elongate form which can be held easily in the hand in a similar manner to a writing instrument.

In the case of a hand-held device, the housing preferably has a nose shaped leading section which faces towards an authenticatable item, in use. This together with a pointed core where provided enables the user to position the sensor reasonably accurately at the area to be scanned.

The hand held device is likely to be used in a swiping mode over an area supposedly carrying the magnetic or magnetisable particles. For example this may be a patch of security indicia or a serial or other number or the like.

The sensor will pass over the area and if the appropriate material is present give a signal such as a bleep. Because the circuit will need to respond to a transient signal because of the relative motion between the sensor and the substrate, the indicating means will preferably be arranged such that the signal is caused to be latched on for a period, say one second, after the threshold of the induced voltage has been reached.

If the sensor is to be passed over a series of magnetic indicia, the indicating means may incorporate signal counting means or signal integrating means and means for setting the threshold at which the device will operate.

The magnetically induced voltage is thus arranged to cause a digital output signal. Alternatively an analogue signal or multilevel signal could be used.

The resulting signal may be used to operate a signalling device or any other suitable device.

Two or more sensors may be combined, say in a linear arrangement to allow scanning over multiple zones in the authenticatable item or to allow a variety of different documents to be used.

Individual signal outputs may be employed or alternatively the outputs may be combined in a logic circuit to give a net output which reflects the authenticity of the item.

Should the sensor be mounted in counting or sorting apparatus such that bank notes always pass in a fixed position, the sensor may be employed to record a signature from the note. For example the sensor may be employed to read a magnetic bar code or the like. The magnetic bar code may be in the form of a tape which has bar coded magnetised domains. Alternatively there may be a series of magnetic bars printed on a non-magnetisable background.

The sensor may be incorporated in a device which also contains sensing means for another authenticatable attribute. For example opto-electronic colour discriminating circuitry may be used to generate a colour verification signal and this signal may be used to actuate a colour verification light which is placed beside a light indicating magnetic authentication.

Alternatively the outputs form the magnetic and other attribute/s may be combined in a logic circuit to provide a net authentication indication.

The sensor of the invention also allows the use of two sensors which have different sensitivity so as to discriminate between levels of magnetic coupling.

If magnetic coding is to be recorded the recording circuitry may be arranged to display the signal directly for example on a liquid crystal display.

Alternatively the signal may be stored and processed for further message display or it may be used for comparison with previously stored data and a resultant signal output.

Sensors according to the invention can be used in a wide variety of applications some of which are mentioned above. They are particularly suited to the detection of magnetic inks especially lithographic inks, letter-press inks, intaglio inks, and screen inks as well as single component magnetic toners, that is toners which incorporate ferromagnetic particles. It is desirable to make use of inks which contain a small proportion of magnetic particles, for example down to 2.5% or less by weight. In addition, the sensor could be used with coatings of ferromagnetic particles (especially iron oxide) such as on magnetic tapes (such as used in credit cards), on tickets, on hot stamping foils (eg. for magnetic signature panels) and transferred magnetic film such as for OCR type reading on cheques. The sensor is small enough to be used to detect one digit of a series of symbols or alphanumeric characters having different magnetic characteristics from the rest, especially a serial number printed with say the first character (indicating the note series) magnetic and the rest in normal ink, all having the same visible appearance. In addition, the sensor could be used with ink/toner/tape/transferred layers on the surface of the item or concealed under the surface of the item.

Authenticatable items with which the sensor could be used include security printed documents such as banknotes, passport pages, traveller's cheques, bank cheques, tickets including transport tickets, stadium entrance (entertainment admission) tickets, ski passes, financial or service entitlement cards, visas, lottery tickets, bonds, fiscal certificates, identity cards, permits, licences, magnetic data cards such as credit cards, vouchers, passports, parking tickets, brand identification labels, holograms having non-holographic information applied by a printing press/electrostatic printer, and the like.

Thus the sensor may be used to authenticate read printed magnetic markings on magnetically barcoded items such as retail goods or labels, or magnetically encoded tapes affixed to price labels, ledger pages, travel tickets and financial transaction cards.

Typical substrates for the authenticatable item comprise paper including rag paper and surface finished papers, synthetic paper including non-woven paper, spun bonded paper, metallic foil laminates, plastic film, plastic card, paper-plastic laminates, and metallised plastic.

The magnetic material could be applied to the substrates continuously or discontinuously by printing, electrostatic deposition, pressure transfer (ambient or heated as in daisy wheel printers and magnetic hot stamping foils).

In summary, the sensor is suitable for detecting any ferromagnetic materials.

In the description so far, the presence of a single coil has been envisaged. However, it is possible that more than one coil could be provided, for example, wound on a common magnetically permeable core, the two coils having different numbers of turns so as to allow for the detection of different levels of magnetic perterbation. Alternatively, a single winding could be tapped. In a further alternative, different levels of magnetism could be detected downstream of the coil by detecting different induced EMFs.

In a further alternative, a multiple sensing assembly could be provided, comprising a number of sensors laterally spaced apart and magnetically isolated from one another.

Some examples of sensors according to the invention will now be described with reference to the accompanying drawings, in which:-

Figure 1 illustrates one example of a hand-held sensor;
Figures 2A and 2B illustrate the nose portion of the first example in more detail;
Figures 3A and 3B illustrate a modified nose portion;
Figures 4A to 4C are circuit diagrams of the circuit incorporated into the sensor shown in Figures 1 and 2;
Figure 5 illustrates a second example of a hand-held sensor;
Figures 6A-6H illustrate different configurations for the magnet and coil; and,
Figures 7A-7H illustrate further configurations for the magnet and coil.

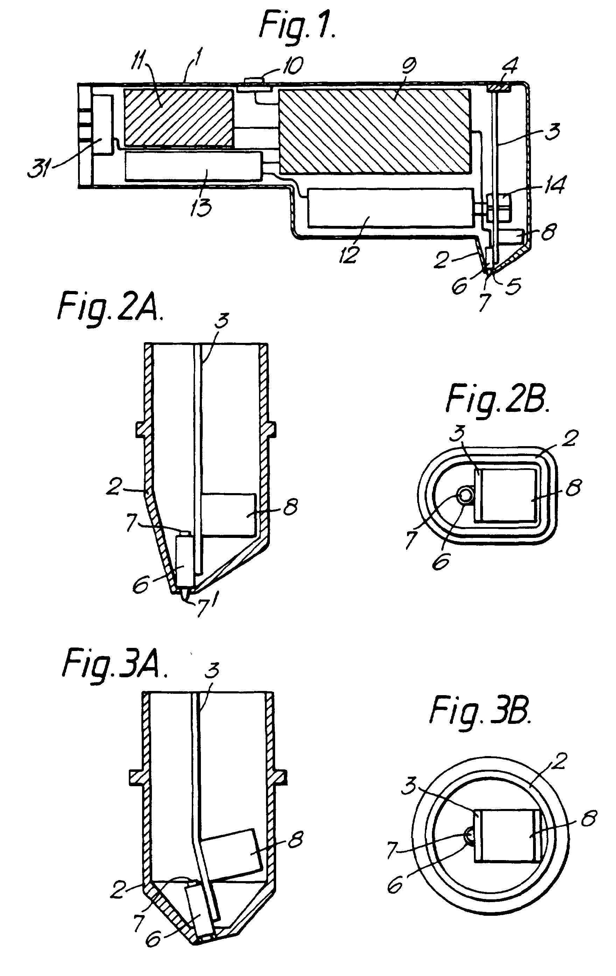

Figure 1 illustrates a hand-held magnetic detector comprising a plastics housing 1 having a generally cylindrical cross-section with a protruding nose portion 2. A leaf spring 3 is suspended from a support 4 within the housing and terminates adjacent a downwardly facing opening 5 in the nose portion 2. The free end of the leaf spring 3 carries a microcoil 6 of enamelled copper wire wound around a ferrite rod 7 (Figure 2) having a taped leading end 7'. A permanent magnet, for example a samarium cobalt magnet 8 is mounted to the opposite side of the leaf spring 3 from the micro coil 6. The magnet 8 has dimensions of about 4 x 4 x 2 mm with its magnetic axis running orthogonal to the axis of the coil and, as can be seen, is mounted behind the coil in a position which avoids saturation of the ferrite core. Other orientations of the magnetic axis are possible.

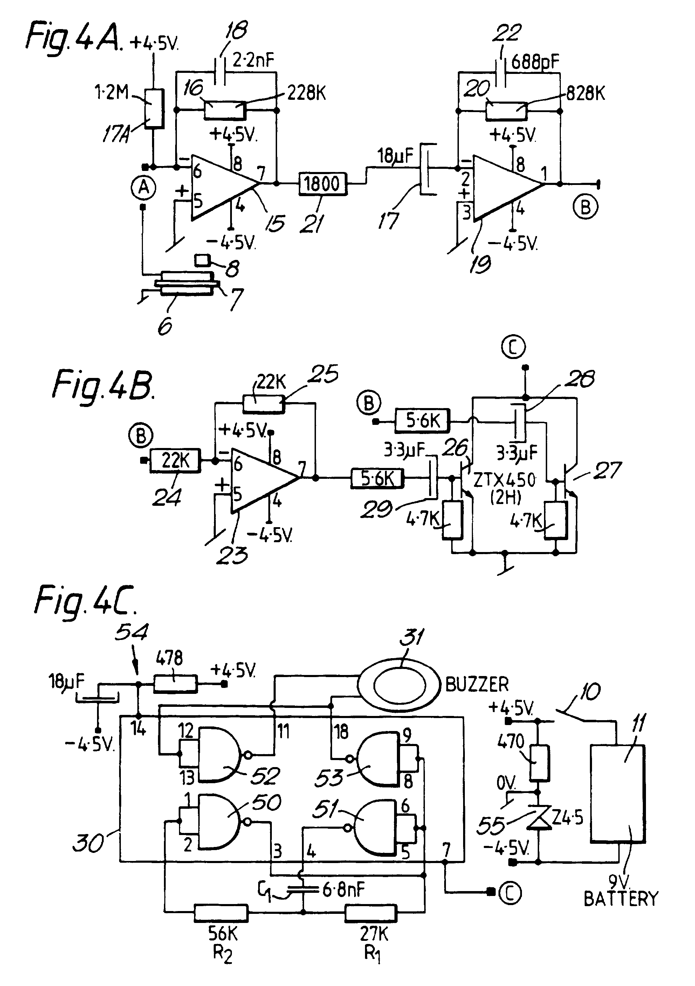

The ends of the micro coil 6 are connected (not shown) to a printed circuit board (PCB) 9 mounted within the housing. The components of the PCB 9 are illustrated in Figures 4A to 4C and will be described in more detail below. A push-button 10 is mounted externally of the housing 1 to activate the circuit while a battery 11 is is mounted within the housing 1 and is connected to the PCB.

The coil 6 has 1200 turns of enamelled wire, a resistance of 480 ohms and a self-inductance of 7 mH. The axial length of the linearly formed coil is about 4.5 mm and the outside diameter of the coil about 0.8 mm. Generally, the outside diameter of the windings on the core will be less than 2 mm, preferably less than 1 mm.

The magnet 8 and the coil 6 together form a magnetic circuit with the steady magnetic field generated by the magnet 8 passing through the turns of the coil 6 and core 7.

The sensor shown in Figure 1 can be used for detecting premagnetized substrates, for example the magnetic track on a credit card but is particularly suitable for detecting unmagnetized but magnetizable particles. To detect such particles, the switch 10 is depressed to activate the circuit and the coil is then moved to the appropriate part of the substrate, such as a banknote, which itself may or may not be stationary. During the relative oscillatary or swiping movement between the coil and the substrate, the ferrite rod will be slightly spaced away (for example up to 1.0 mm) from the substrate. The relative movement between the magnetizable particles and the sensor causes a perturbation in the magnetic field which induces a voltage in the coil 6 which is then detected by the circuit shown in Figures 4A to 4C. The electrical voltage generated is proportional to the speed of variation of the magnetic flux. It is interesting to evaluate the order of magnitude of the flux and of the corresponding voltage which can be produced. The flux is:

$$Flux = B * S$$

with: B, magnetic induction and S the cross-sectional area in which B exists

By supposing a sinusoidal variation of the flux, the voltage induced in a coil becomes:

$$E = 2\pi.N.F.Flux$$

with: N, number of coil turns and F, frequency of the movement.

Typical values can be estimated for B and S (for printed characters): respectively 0.01 Tesla (100 Gauss) and 0.1 mm$^2$. According to these values, the amplitude of the induced voltage is:

$$E \text{ (volt)} = 6.28 \times 10^{-9}. N.F$$

Such a voltage is very small. For achieving high values it is necessary to use a coil with a high N (at least 1,000) at a high frequency, for example 10 Hz. With such values the amplitude of the induced voltage is:

$$E = 62 \text{ microvolts}$$

The voltage produced is relatively low. For obtaining the level of a few volts which are necessary to supply a buzzer, a gain of $10^5$ is required. This is achieved by using a suitable amplifying circuit which will be described below.

The frequency of the signal depends on the speed of relative movement and the nature of the printed design. Typically, the frequency will be between 40 and 300 Hz and the induced voltage amplitude will be between 5 and 100 microvolts.

The processing circuit mounted on the PCB 9 is shown in Figures 4A-4C. The coil 6 beside magnet 8 is connected to a preamplifier comprising a FET amplifier 15. The gain of the FET amplifier 15 is about 450 and corresponds to the ratio between the feedback resistor 16 (228k Kohms) and the resistance of the coil which is about 480 ohms.

The level of the input signal is between 5 and 100 microvolts. The pre-amplifier amplifies this to 2 to 40 millivolts. The electronic noise at this output is about 1 mV Thus the signal to electronic noise ratio is between 2 and 40. On the other hand, with a gain of 450, the offset voltage is of the same order of magnitude as the signal, i.e. typically 10 to 20 millivolts.

It is therefore not possible to use a direct coupling with the second amplifier. Thus this coupling is realized by means of a capacitor 17 which cuts the DC component. However this capacitor has to be relatively high in order to obtain a quasi-DC coupling, for example 10 microfarads. Practically, this capacitor must be of the electrolytic type so as to reduce its size as much as possible. Since this kind of capacitor is polarized a negative bias of about 0.8 volt at the pre-amplifier output is necessary. This is obtained by means of the 1.2 megohm 17A resistor at the input.

Vibration noise is eliminated by the filter constituted by a 2.2 nanofarads capacitor (18) in parallel to the feedback resistor 16. The cutting frequency of this filter is 330 Hz.

A second FET amplifier 19 has to amplify the signal up to a few volts ($\pm$4.5 volts peak to peak) in order to render it usable for the acoustic output. The second FET amplifier 19 has a gain the same as for the pre-amplifier, i.e. 450. (Defined by the ratio between the feedback resistor 20 and the input resistor 21, respectively 828 Kohms and 1.8 Kohms).

The coupling of the second amplifier 19 with the pre-amplifier output is realized by the 10 microfarads capacitor 17 in series with the 1.8 Kohm input resistor 21. This coupling constitutes a high-pass filter for all frequencies higher than 10 Hz.

The second amplifier also contributes towards the elimination of vibration noise by means of a low-pass filter constituted by a 688 picofarads capacitor 22 in parallel with the feedback resistor 20. Its cut-off frequency is the same as for the pre-amplifier, the rate of the amplitude decrease is 12 decibels/octave.

The amplified signal has to be converted into a DC voltage usable for the supply of the acoustic generator. This operation is ensured by a full wave rectifying circuit (Figure 4B). First, the amplified signal from the second amplifier 19 is inverted by means of an amplifier 23 with a gain of one. The unity gain is obtained by selecting the same value for the input and the feedback resistors 24,25, i.e. 22 Kohms.

The direct and inverted amplified signals can then be used for the full wave rectification. This rectification is obtained by means of two transistors 26,27 mounted in inverter mode and referenced to the minimum voltage (-4.5 volts). The reference voltage of the signals (direct and inverted) being 0 volt, their coupling with the transistors has to be capacitive. This is obtained by two electrolytic capacitors 28,29 of 3.3 microfarads, the high pass frequency cut-off being about 9 Hz.

The acoustic generator consists of a square wave oscillator, an amplifier and finally a piezoceramic buzzer 31.

The oscillator comprises two CMOS NAND logic gates 50,51 interconnected by an RC circuit. With the values of the components shown ($C_1$ = 6.8 nF; $R_1$ =27 Kohms; $R_2$ = 56 Kohms) the frequency is about 3500 Hz.

The amplification effect is obtained by using two additional NAND gates 52,53 supplied at their inputs by the oscillator in such a way as to obtain the direct and the inverted square wave oscillations. Thus the differential wave has a peak to peak amplitude which is twice the DC voltage provided by the rectifying circuit. Since this voltage can attain about 8 volts, the maximum peak to peak square wave is 16 volts.

The four NAND gates 50-53 constituting the oscillator and the amplifier are made of a quadruple 2-input NAND gate CMOS integrated circuit 30 (type HEF4011B). This circuit 30 is supplied by the voltage existing between the positive voltage of the battery 11 (+9 volts) and the collectors of the two rectifying transistors. An RC filter 54 (470 ohms and 10 microfarads) is mounted in series in order to limit the peak of current consumed by the amplifier and the buzzer.

The buzzer 31 comprises a piezoelectric disk glued to a nickel plated membrane mounted into the casing 1 of the detector unit. Its own frequency depends not only on the membrane itself but also on the casing. It is connected to the differential output of the two NAND gates amplifier 52,53.

The supply circuit has to create the two symmetric voltages necessary for the differential amplifiers. This is ensured by a 4.5 volt zener diode 55 mounted in series with a 470 ohm resistor 56.

The electric source itself consists of a 9 volt battery 11 supplying the electronic circuit via the ON-OFF switch 10 hand-operated when the detection unit is employed. The total current consumption is about 18 to 20 mA. When the unit is switched on, a beep is emitted. This beep, which is due to the transitory charge of the capacitors, is used to indicate the state of readiness of the detection unit.

It should be noted that, the high gain used in the two amplification stages makes the units very sensitive for the detection of magnetic ink.

The relative movement required between the sensor and authenticatable item can be achieved simply by moving the sensor to and fro but this is substituted or enhanced in the example shown in Figure 1 by use of an oscillating system comprising a motor 12 powered by a battery 13 mounted in the housing 1. The motor 12 is also actuated upon depression of the push-button 10. The axle of the motor 12 is coupled to a substantially rectangular cam 14 which is rotated against the leaf spring 3 so as repeatedly to oscillate the leaf spring, the spring returning to the rest position under its inherent spring action. The motor 12 rotates at about 10 turns per second.

Typically, the leaf spring 3 is non-magnetizable and non-ferromagnetic and has a length of about 65 mm, the cam being applied at a position about 15 mm from the support 4 and defining an oscillating distance of about 4 or 5 mm.

In Figure 3 a modified head with slanted nose portion to facilitate operation in a slanted hand held mode is shown. Numbers correspond to those in Figure 2.

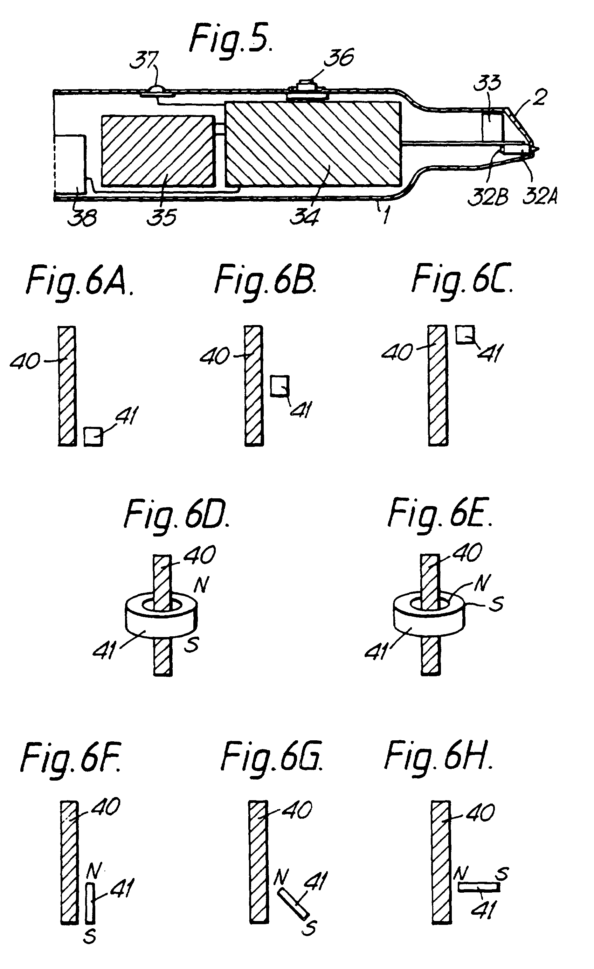

Figure 5 represents a second example of a hand held detector for swiping use contained in a plastics housing 1 and having a sensing head 2 which contains a microcoil 32A wound on a ferrite core 32B and a magnet 33 held at a set distance from the tip of the coil. The coil is connected to electronic circuitry 34 and is supplied with power from a battery 35. These components will be similar to those of Figure 1. In operation a switch 36 is pressed to allow the sensor to operate and if a magnetic signal of sufficient strength is detected the circuitry causes a light emitting diode 37 to become illuminated and a piezo electric sounder 39 to operate.

Figures 6A to 6H illustrate a number of generally preferred geometric configurations for the microcoil and magnet. In these examples, the microcoil is indicated by reference numeral 40 and the magnet by reference numeral 41. The north and south pole assignments may be reversed. Figure 6A shows the microcoil 40 and magnet 41 mounted generally parallel with their leading faces substantially flush. In these cases the magnet has a general cuboid configuration. The magnetic axis may be in any rectilinear direction to the axis of the coil. Figures 6B and 6C illustrate variations of Figure 6A with the magnet 41 placed at mid and rear positions respectively.

Figure 6D illustrates an annular magnet 41 positioned about the microcoil 40 with the North-South direction extending generally parallel with the microcoil. Figure 6E illustrates a variation of the Figure 6D example in which the North-South direction is orthogonal to the axis of the microcoil 40.

Figure 6F illustrates a magnet 41 with a generally rectangular cross-section extending parallel with the microcoil 40 and with the leading faces of the microcoil and magnet being substantially flush. Figure 6G is a modification of Figure 6F in which the magnet 41 is arranged with the North-South direction at about 45° to the microcoil axis. Figure 6H is the currently most preferred configuration in which the elongate magnet 41 has the North-South direction orthogonal to the axis of the microcoil 40. This corresponds to the example shown in Figure 1.

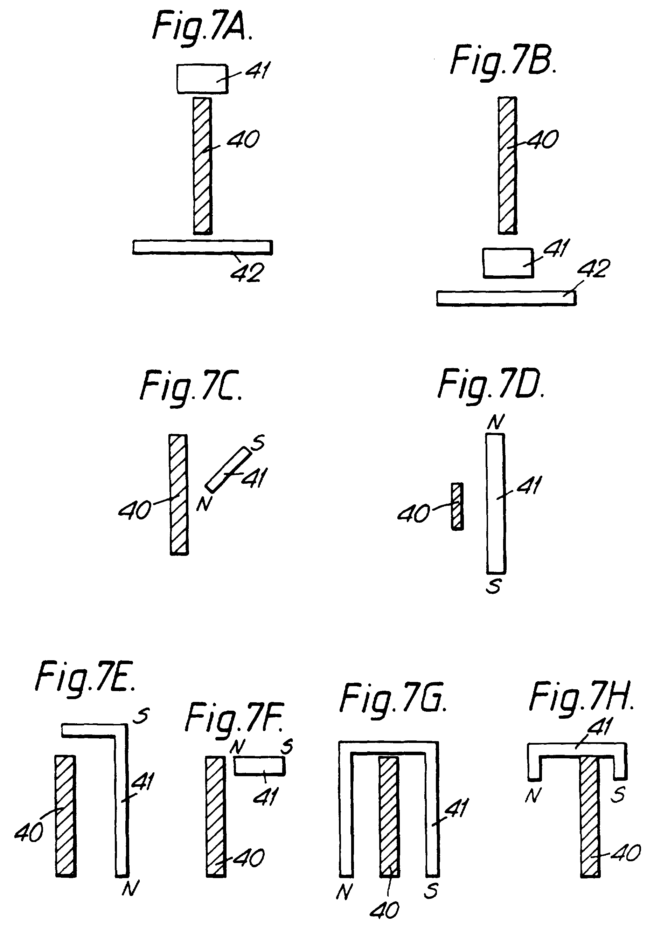

Figures 7A to 7H illustrate some further configurations which may be less preferred than the configurations of Figure 6. In Figure 7A the magnet 41 is mounted behind the microcoil 40 and substantially coaxial therewith, the substrate 42 being shown in the drawings. Figure 7B is the reverse of Figure 7A with the magnet nearer to the substrate 42 than the coil 40.

In Figure 7C an elongate magnet 41 is shown with the North-South direction at substantially 135° to the microcoil axis. As shown in the previous diagrams, in general the linear dimensions of the magnet 41 should not greatly differ from the length of the microcoil and typically should not differ by more than one order of magnitude being usually smaller than the microcoil. Figure 7D illustrates a variation in which the magnet 41 is larger than the length of the microcoil 40 and is arranged parallel with the microcoil axis. With such a physically large magnet the coil may become saturated detrimentally.

Figure 7E illustrates a generally L-shaped magnet 41 and Figure 7F illustrates a bar magnet 41 positioned with its axis orthogonal to the microcoil axis and at the rear of the microcoil. Figure 7G illustrates a U-shaped magnet whose poles are substantially flush with the leading end of the microcoil 40. Figure 7H illustrates a U-shaped magnet with short arms terminating near the rear end of the microcoil 40.

It should be understood that in connection with Figures 6 and 7, references to the "microcoil" 40 are intended to refer to a combination of microcoil and core where a core is provided, the length of the core being predominant if this is greater than the length of the microcoil itself.

In a further alternative embodiment (not shown) the microcoil may be wound round the edge of a disc of ferrite material. In this instance the circular surface of the disc would be placed over the magnetisable material.

The sensitivity of the device may be increased by providing electromagnetic screening to reduce the likelihood of spurious signals of electromagnetic origin. Screening may be electrical, by providing a Faraday cage of metal foil around the device other than the sensing head. Magnetic screening may be provided by providing lossy metal covering while still ensuring responsiveness of the coil under test.

**Claims**

1. A sensor for sensing magnetisable or magnetised areas on or in an authenticatable item such as a security document during relative lateral movement between the sensor and the item, the sensor comprising a sensing device including a magnet (9) and an electrical coil (6.7). the coil not being wound on the magnet wherein the magnet generates a steady magnetic field in use: and indicating means connected in an electrical circuit with the coil for indicating induced voltage in the circuit caused by a change in magnetic flux influencing the turns of the coil: wherein coil is a microcoil having a circular cross-section and with a diameter in the range 0,1-3mm; and wherein the magnet (8) and the electrical coil (6,7) are arranged such that the coil is under the influence of the magnetic flux from the magnet thus defining a magnetic circuit, whereby the passage of a magnetisable or magnetised area of an authenticatable item past the sensor perturbs the magnetic field in the magnetic circuit thereby changing the magnetic flux influencing the coil and inducing an electrical voltage in the circuit.

2. A sensor according to claim 1, wherein the coil axis extends in a direction substantially orthogonal to the plane of the authenticatable item, in use.

3. A sensor according to claim 1 or claim 2, wherein the magnetic circuit has an open section defined between non-facing faces of the sensing device. the authenticatable item passing through the open section of the magnetic circuit in use.

4. A sensor according to claim 3. when dependent on claim 2. wherein the coil defines one of the faces of the sensing device.

5. A sensor according to any of the preceding claims. wherein the coil is wound around a soft ferromagnetic core which, in use. is unsaturated

6. A sensor according to any of the preceding claims. wherein the length of the coil is in the range 2-30 mm.

7. A sensor according to any of the preceding claims. wherein the number of turns in the coil is in the range 200-5000.

8. A sensor according to any of the preceding claims. wherein the diameter of the wire forming the coil is less than 1000 microns.

9. A sensor according to any of the preceding claims. further comonsing oscillation means for oscillating the coil and magnet in synchronism.

10. A sensor according to any of the preceding claims. wherein the indicating means provides an audio and/or visual indication of the induced voltage in the circuit.

11. A sensor according to any of the preceding claims. further comprising a housing in which the sensing device is mounted. the housing being adapted to be hand-held and portable

12. A method of detecting magnetisable or magnetised areas on or in an authenticatable item such as a security document, the method comprising causing relative movement between the item and a sensor according to any one of the preceding claims, and monitoring the indicating means for an indication of induced voltage in the electrical circuit.

13. A method according to claim 12, wherein the magnetisable or magnetised areas are printed in magnetic ink or electrostatically deposited single component magnetic toner, or provided as a coating of ferromagnetic particles.

**14.** A method according to claim 12 or claim 13. wherein the area defines one or more alphanumeric characters.

**15.** A method according to any of claims 12 to 14. wherein the item includes a substrate of paper synthetic paper, spun bonded paper, metallic foil laminate. plastic film. plastic card. paper-plastic laminate, or metallised plastic

**16.** A method according to any of claims 13 to 15 wherein the authenticatable item is a security printed document chosen from the group including banknotes, passport pages. traveller's cheques. bank cheques. tickets including transport tickets. stadium entrance (entertainment admission) tickets, ski passes. financial or service entitlement cards, visas, lottery tickets. bonds, fiscal certificates, identity cards, permits. licences. magnetic data cards such as credit cards. vouchers. passports, parking tickets. brand identification labels. holograms having non-holographic information applied by a printing press/electrostatic printer, and the like.

**17.** Sheet handling apparatus defining a path along which sheets are transported: and a sensor according to any of claims 1 to 10 mounted adjacent the path so as to detect the passage of a security document containing magnetisable or magnetised areas along the path.

**18.** A multiple sensing assembly comprising a numper of sensors according to any of claims 1 to 10 laterally spaced apart and magnetically isolated from one another.

**Patentansprüche**

**1.** Meßfühler für magnetisierbare oder magnetisierte Bereiche auf oder in einem authentisierbaren Gegenstand, z.B. einem Sicherheitsdokument, während einer Relativbewegung zwischen dem Meßfühler und dem Gegenstand, mit einer Fühlvorrichtung, die einen Magneten (8) und eine elektrische Spule (6, 7) aufweist, wobei der Magnet im Betrieb ein konstantes Magnetfeld erzeugt; und einem Anzeigemittel, das in einer elektrischen Schaltung mit der Spule verbunden ist, um eine in der Schaltung induzierte Spannung anzuzeigen, die durch eine Änderung des die Windungen der Spule beeinflussenden magnetischen Flusses bewirkt wird, wobei die Spule eine Mikrospule mit kreisförmigen Querschnitt und mit einem Durchmesser im Bereich von 0,1 bis 3 mm der Magnet (8) und die elektrische Spule (6, 7) so angeordnet sind, daß die Spule unter dem Einfluß des magnetischen Flusses des Magneten steht und somit einen Magnetkreis begrenzt, so daß der Vorbeilauf eines magnetisierbaren oder magnetisierten Bereiches eines authentisierbaren Gegenstands an dem Meßfühler das magnetische Feld in dem Magnetkreis stört und dadurch den magnetischen Fluß ändert, der die Spule beeinflußt und eine elektrische Spannung in der Schaltung induziert.

**2.** Meßfühler nach Anspruch 1, bei dem sich die Spulenachse im Betrieb in einer weitgehend senkrechten Richtung zur Ebene des authentisierbaren Gegenstands erstreckt.

**3.** Meßfühler nach Anspruch 1 oder 2, bei dem der Magnetkreis einen offenen Abschnitt aufweist, der zwischen einander nicht zugekehrten Flächen der Fühlvorrichtung begrenzt ist, wobei der authentisierbare Gegenstand während des Betriebs durch den offenen Abschnitt des Magnetkreises hindurchläuft.

**4.** Meßfühler nach Anspruch 3, zurückbezogen auf Anspruch 2, bei dem die Spule eine jener Flächen der Fühlvorrichtung begrenzt.

**5.** Meßfühler nach einem der vorstehenden Ansprüche, bei dem die Spule um einen weichferromagnetischen Kern herumgewickelt ist, der im Betrieb ungesättigt ist.

**6.** Meßfühler nach einem der vorstehenden Ansprüche, bei dem die Länge der Spule im Bereich von 2 bis 30 mm liegt.

**7.** Meßfühler nach einem der vorstehenden Ansprüche, bei dem die Anzahl der Windungen der Spule im Bereich von 200 bis 5000 liegt.

**8.** Meßfühler nach einem der vorstehenden Ansprüche, bei dem der Durchmesser des die Spule bildenden Drahtes kleiner als 1000 mm ist.

**9.** Meßfühler nach einem der vorstehenden Ansprüche mit einem Oszellationsmittel, das die Spule und den Magneten synchron in Schwingungen versetzt.

**10.** Meßfühler nach einem der vorstehenden Ansprüche, bei dem das Anzeigemittel eine hörbare und/oder sichtbare Anzeige der in der Schaltung induzierten Spannung bewirkt.

**11.** Meßfühler nach einem der vorstehenden Ansprüche, mit einem Gehäuse, in dem die Fühlvorrichtung angeordnet ist und das so gestaltet ist, daß es in der Hand gehalten werden kann und tragbar ist.

**12.** Verfahren zum Feststellen magnetisierbarer oder magnetisierter Bereiche auf oder in einem authentisierbaren Gegenstand, z.B. einem Sicherheitsdokument, bei dem eine Relativbewegung zwischen dem Gegenstand und einem Meßfühler nach einem der vorstehenden Ansprüche bewirkt und das Anzeigemittel zum Anzeigen einer in der elektrischen Schaltung induzierten Spannung überwacht wird.

13. Verfahren nach Anspruch 12, bei dem die magnetisierbaren oder magnetisierten Bereiche mit magnetischer Farbe oder einem elektrostatisch niedergeschlagenen Einkomponenten-Magnettoner aufgedruckt oder als Überzug aus ferromagnetischen Teilchen ausgebildet sind.

14. Verfahren nach Anspruch 12 oder 13, bei dem der Bereich ein oder mehrere alphanumerische Zeichen begrenzt.

15. Verfahren nach einem der Ansprüche 12 bis 14, bei dem der Gegenstand ein Substrat aus Papier, synthetischem Papier, Spinnvlies-Papier, einem Metallfolienlaminat, einer Kunststoffolie, einer Kunststoffkarte, einem Papier-Kunststoff-Laminat oder einem metallisierten Kunststoff enthält.

16. Verfahren nach einem der Ansprüche 13 bis 15, bei dem der authentisierbare Gegenstand ein gedrucktes Sicherheitsdokument ist, das aus der Gruppe ausgewählt ist, die Banknoten und Ausweisseiten, Reiseschecks, Bankschecks, Tickets, einschließlich Transportticket, Stadioneintrittstickets (Unterhaltungseintrittstickets), Skipässe, Finanz- oder Dienstleistungsberechtigungskarten, Visen, Lotterietikets, Bonds, fiskalische Zertifikate, Identitätskarten, Genehmigungen, Lizenzen, magnetische Datenkarten, z.B. Kreditkarten, Vouchers, Pässe, Parkscheine, Markenidentifizierungsetikette, Hologramme mit nichtholographischen Informationen, die durch einen Abdruck- oder elektrostatischen Drucker aufgebracht wurden und dergleichen.

17. Blattbehandlungsgerät, das eine Bahn begrenzt, längs der Blätter transportiert werden, und ein Meßfühler nach einem der Ansprüche 1 bis 10, der in die Nähe der Bahn angeordnet ist, so daß er den Durchlauf eines Sicherheitsdokuments mit magnetisierbaren oder magnetisierten Bereichen längs der Bahn feststellt.

18. Mehrfühleranordnung mit einer Anzahl von Meßfühlern nach einem der Ansprüche 1 bis 10, die seitlich auseinanderliegen und magnetisch gegeneinander isoliert sind.

**Revendications**

1. Capteur pour la détection de zones magnétisables ou magnétisées sur ou dans un article identifiable tel qu'un document de sécurité lors d'un déplacement latéral relatif entre le capteur et l'article, le capteur comprenant un dispositif de détection comprenant un aimant (8) et une bobine électrique (6, 7), la bobine n'étant pas enroulée sur l'aimant, où l'aimant génère un champ magnétique permanent en utilisation, et un moyen d'indication raccordé dans un circuit électrique à la bobine pour indiquer une tension induite dans le circuit provoquée par une variation du flux magnétique agissant sur les spires de la bobine ;

où la bobine est une microbobine ayant une section droite circulaire et un diamètre compris dans l'intervalle de 0,1 à 3 mm ; et où l'aimant (8) et la bobine électrique (6, 7) sont disposés de telle façon que la bobine soit sous l'influence du flux magnétique de l'aimant, définissant alors un circuit magnétique, si bien que le passage d'une zone magnétisable ou magnétisée d'un article identifiable devant le capteur perturbe le champ magnétique dans le circuit magnétique, modifiant ainsi le flux magnétique agissant sur la bobine et induisant une tension électrique dans le circuit.

2. Capteur selon la revendication 1, dans lequel l'axe de bobine s'étend dans une direction pratiquement normale au plan de l'article identifiable, en utilisation.

3. Capteur selon la revendication 1 ou 2, dans lequel le circuit magnétique possède une section ouverte définie entre des faces non en vis-à-vis du dispositif de détection, l'article identifiable passant dans la section ouverture du circuit magnétique, en utilisation.

4. Capteur selon la revendication 3, lorsque dépendante de la revendication 2, dans lequel la bobine définit une des faces du dispositif de détection.

5. Capteur selon l'une quelconque des revendications précédentes, dans lequel la bobine est enroulée autour d'un noyau ferromagnétique doux qui est insaturé, en utilisation.

6. Capteur selon l'une quelconque des revendications précédentes, dans lequel la longueur de la bobine est comprise entre 2 et 30 mm.

7. Capteur selon l'une quelconque des revendications précédentes, dans lequel le nombre de spires de la bobine est compris entre 200 et 5 000.

8. Capteur selon l'une quelconque des revendications précédentes, dans lequel le diamètre du fil formant la bobine est inférieur à 1 000 μm.

**9.** Capteur selon l'une quelconque des revendications précédentes, comprenant, de plus, un moyen oscillant pour faire osciller la bobine et l'aimant en synchronisme.

**10.** Capteur selon l'une quelconque des revendications précédentes, dans lequel le moyen d'indication fournit une indication sonore et/ou visuelle de la tension induite dans le circuit.

**11.** Capteur selon l'une quelconque des revendications précédentes, comprenant, de plus, un boîtier dans lequel est monté le dispositif de détection, le boîtier étant prévu pour être manié à la main et portatif.

**12.** Procédé de détection de zones magnétisables ou magnétisées sur ou dans un article identifiable comme un document de sécurité, le procédé comprenant la création d'un déplacement relatif entre l'article et un capteur selon l'une quelconque des revendications précédentes, et le contrôle du moyen d'indication pour indiquer une tension induite dans le circuit électrique.

**13.** Procédé selon la revendication 12, dans lequel les zones magnétisables ou magnétisées sont imprimées avec une encre magnétique ou avec un toner magnétique à composant unique déposé de façon électrostatique, ou sont prévues sous la forme d'un revêtement de particules ferromagnétiques.

**14.** Procédé selon la revendication 12 ou 13, dans lequel la zone définit un ou plusieurs caractères alphanumériques.

**15.** Procédé selon l'une quelconque des revendications 12 à 14, dans lequel l'article comprend un support de papier, un papier synthétique, un papier filé lié, un stratifié de feuilles de métal, un film de matière plastique, une carte de matière plastique, un stratifié de papier/plastique ou une matière plastique métallisée.

**16.** Procédé selon l'une quelconque des revendications 13 à 15, dans lequel l'article identifiable est un document imprimé de sécurité choisi dans le groupe comprenant les billets de banque, les pages de passeport, les chèques de voyage, les chèques de banque, les tickets comprenant les tickets de transport, les tickets d'entrée de stade (admission à un spectacle), les badges de forfait de ski, les cartes d'autorisation financière ou de service, les visas, les billets de loterie, les titres, les certificats fiscaux, les cartes d'identité, les permis, les licences, les cartes de données magnétiques comme les cartes de crédit, les pièces justificatives, les passeports, les tickets de parquage, les étiquettes d'identification de marque, les hologrammes ayant une information non holographique appliquée par une presse d'impression/imprimante électrostatique et similaires.

**17.** Dispositif de manipulation de feuille définissant un trajet le long duquel les feuilles sont transportées et un capteur, selon l'une quelconque des revendications 1 à 10, monté adjacent au trajet de façon à détecter le passage d'un document de sécurité contenant des zones magnétisables ou magnétisées le long du trajet.

**18.** Ensemble de détection multiple comprenant un certain nombre de capteurs selon l'une quelconque des revendications 1 à 10, latéralement écartés les uns des autres et magnétiquement isolés entre eux.

Fig.1.

Fig.2A.

Fig.2B.

Fig.3A.

Fig.3B.

*Fig.4A.*

*Fig.4B.*

*Fig.4C.*

# Fig.5.

# Fig.6A.    Fig.6B.    Fig.6C.

# Fig.6D.    Fig.6E.

# Fig.6F.    Fig.6G.    Fig.6H.

Fig.7A.

Fig.7B.

Fig.7C.

Fig.7D.

Fig.7E.

Fig.7F.

Fig.7G.

Fig.7H.